# EUROPÄISCHE PATENTSCHRIFT

(11) **EP 0 337 415 B1**
(45) Veröffentlichungstag und Bekanntmachung des Hinweises auf die Patenterteilung: **30.06.1993**
(21) Anmeldenummer: 89106467.7
(22) Anmeldetag: 12.04.1989
(51) Int. Cl.: F16F 1/36, G10K 11/16

(54) **Schalldämmelement**
Sound damping element
Elément amortisseur de bruit

(30) Priorität: 14.04.1988 DE 8804884 U
(43) Veröffentlichungstag der Anmeldung: 18.10.1989
(73) Patentinhaber: Müller, Franz, D-65205 Wiesbaden (DE)
(72) Erfinder: Müller, Franz, D-65205 Wiesbaden (DE)
(74) Vertreter: Jochem, Bernd, Dipl.-Wirtsch.-Ing.

(56) Entgegenhaltungen:
- DE-A- 3 029 588
- DE-A- 3 432 768
- FR-A- 1 201 898
- US-A- 1 754 308
- US-A- 1 778 024
- US-A- 2 215 743
- US-A- 2 425 567

## Beschreibung

Die Erfindung betrifft ein Schalldämmelement, bestehend aus zwei mit Befestigungsmitteln versehenen, tragfesten Teilen, die durch einen von ihnen weitgehend umschlossenen Zwischenkörper aus einem elastomeren Material miteinander verbunden sind, mit einem Unterteil, das einen Hohlraum mit einer mittleren Öffnung, welche mit Abstand zur Umfangswand des inneren Hohlraumes angeordnet ist, aufweist und mit mehreren Befestigungsmitteln am Rand des Unterteils sowie einem Oberteil, welches mehrere mit Abstand voneinander angeordnete Befestigungsmittel trägt und einen Fußteil hat, der vom Rand der Öffnung übergriffen wird, zur Lagerung und Aufnahme einer Horizontalkraft bei z. B. Heizungsrohren, Luftkanälen, Aggregaten und Maschinen.

Derartige Schallämmelemente sind aus den Fig. 5 bis 12 der US-A-2,215,743 bekannt. Sie dienen zur schalldämmenden Lagerung von Fahrzeugmotoren und haben mehrere aus Öffnungen im Unterteil nach oben herausragende Kopfteile mit Befestigungsmitteln, die mit Bezug auf die Fahrtrichtung, d. h. die Richtung der aufzunehmenden horizontalen Kraft, nebeneinander angeordnet sind, so daß schon eine verhältnismäßig geringe Horizontalkraft eine Kippbewegung des Oberteils relativ zum Unterteil verursacht. Ein weiterer Mangel des bekannten Schalldämmelements besteht darin, daß der Fußteil und der mit ihm verbundene elastomere Zwischenkörper unter elastischer VorSpannung in ein mit der Öffnung nach unten weisendes, topfförmiges Unterteil eingebaut wird und bei dessen Befestigung auf einer Tragfläche der elastomere Zwischenkörper weiter komprimiert wird, so daß er mehrachsig verspannt ist. Infolge der unvermeidlichen Toleranzen ist die Verspannung ungleichmäßig und beeinträchtigt in allen Fällen die Schalldämmeigenschaft. Darüber hinaus ist durch innere Hohlräume und Reibstreifen am Zwischenkörper für dessen Beweglichkeit im Unterteil gesorgt. Letzteres ist jedoch z. B. bei Festpunkt-Rohrlagern, wo die im Grunde gegensätzlichen Forderungen nach möglichst guter Schalldämmung, d. h. weicher Lagerung und gleichzeitig großer Kraftaufnahme in horizontaler Richtung erfüllt werden sollen, unerwünscht.

Auch bei einer bekannten elastischen Anhängerkupplung gemäß FR-A-1 201 898 sind an einem in einem bei der Montage komprimierten elastischen Zwischenkörper gelagerten Oberteil, welches mit mehreren Kopfteilen aus verschiedenen Öffnungen im Unterteil herausragt, mehrere Befestigungsmittel in Zugrichtung nebeneinander angeordnet. Auf diese Weise sollen Zugkraftschwankungen in Kippbewegungen des Oberteils umgesetzt werden. Eine stärkere Zugkraft wird durch das Oberteil durchsetzende Bolzen aufgenommen.

Andere bekannte Schalldämmelemente, wie z. B. gemäß US-A-1,754,308, US-A-2,425,567 und DE-A1-34 32 768, und ein unter dem Markennamen "MÜPRO-Schalldämmelement" im Handel erhältliches Schalldämmelement haben nur ein im wesentlichen bolzenförmiges, mit dem Fuß in einen elastomeren Zwischenkörper eingebettetes Oberteil, welches sich zur Aufnahme senkrecht wirkender Lasten eignet, aber, da es nur eine punktförmige Abstützung bietet, zur gleichzeitigen Aufnahme horizontaler Kräfte ungeeignet ist. Beim Auftreten von quer zum Gewindebolzen gerichteten Kräften führt dieser zusammen mit den daran befestigten Teilen eine Kippbewegung aus, was vielfach unerwünscht ist. Diese Nachgiebigkeit bei Querkräften ist wegen des rotationssymmetrischen Aufbaus in allen Richtungen gleich.

Der Erfindung liegt die Aufgabe zugrunde, ein Schalldämmelement der eingangs genannten Art zu schaffen, welches einfach zu montieren und schon von der Bauform her zur Aufnahme verhältnismäßig großer Belastungen geeignet ist, und insbesondere höhere Querkräfte als die bisher gebräuchlichen Schalldämmelemente aufzunehmen in der Lage ist.

Vorstehende Aufgabe wird erfindungsgemäß dadurch gelöst, daß das Unterteil im wesentlichen die Form einer die Öffnung aufweisenden Dose hat, der Fußteil mit Zwischenabstand zu allen Begrenzungswänden des inneren Hohlraumes vollständig in dem diesen ausfüllenden elastomeren Zwischenkörper eingebettet ist und außerhalb der Öffnung die Befestigungsmittel an einem einzigen, fest mit dem Fußteil verbundenen Kopfteil trägt, und daß der Fußteil in seiner Längserstreckung länger ist als die Öffnung im Unterteil, aber nur so lang, daß er bei der Montage in Schräglage oder teilweise gedrehter Lage in die Öffnung einführbar ist.

Im Gegensatz zu den bekannten Schalldämmelementen ist das neue Schalldämmelement in Hinblick auf die Befestigungsmittel und die aufzunehmende Querkraft nicht punktuell, sondern flächig ausgebildet. Die mit Abstand in Richtung einer Querkraft hintereinander angeordneten Befestigungsmittel, z. B. Befestigungslöcher, sowohl im Unterteil als auch im Oberteil verhindern zuverlässig Kippbewegungen dieser Teile relativ zu den jeweils daran befestigten Teilen. Auch die Gestaltung des Unterteils in Form einer vorzugsweise flachen Dose in Verbindung mit einem im wesentlichen plattenförmigen Fußteil führt dazu, daß Kippmomenten infolge von Querkräften mit zunehmender Kippbewegung ein schnell wachsender Widerstand durch den zwischen dem Fußteil und den Begrenzungswänden des inneren Hohlraums des Unterteils örtlich komprimierten elastomeren Zwischenkörper entgegengesetzt wird.

Die verbesserte Aufnahme von Querkräften ohne wesentliche Kippbewegungen muß bei der Erfindung nicht mit einer Verschlechterung der Schalldämmeigenschaft und komplizierterer Montage erkauft werden. Um den formschlüssigen Eingriff der beiden tragfesten Teile des Schalldämmelements zu erhalten, brauchen diese nicht aus mehreren Einzelteilen zusammengebaut zu werden, und es können auch keine unterschiedlichen Verspannungen des elastomeren Zwischenkörpers beim Verschrauben des Unterteils mit einer Tragfläche entstehen. Die Montage kann in besonders einfacher Weise erfindungsgemäß dadurch erfolgen, daß das Oberteil mit seinem Fußteil in Schräglage oder teilweise gedrehter Lage in die Öffnung im Unterteil eingeführt wird, wonach dann das Material für den elastomeren Zwischenkörper in den inneren Hohlraum des Unterteils eingebracht wird, um diesen vollständig auszufüllen und den Fußteil vollständig einzubetten.

Es versteht sich, daß die Montage des Schalldämmelements auch in umgekehrter Lage derart erfolgen kann, daß sich das Unterteil über dem Oberteil befindet. Auch die Montage an senkrechten Wänden ist möglich.

In vielen Anwendungsfällen ist von vornherein bekannt, daß Querkräfte ausschließlich oder hauptsächlich in einer einzigen Richtung auftreten. In einer bevorzugten praktischen Ausführungsform ist daher vorgesehen, daß das Unterteil mit seinem inneren Hohlraum und dessen Öffnung sowie das Oberteil mit seinem Kopf- und Fußteil eine längliche Form haben und sich parallel übereinander und ineinander erstrecken. Bei der Montage wird dieses Schalldämmelement so eingebaut, daß seine Längserstreckung mit der auftretenden Querkraft fluchtet.

Durch das Merkmal, daß der Fußteil des Oberteils vom Rand der Öffnung des Unterteils übergriffen wird, erreicht man einerseits die gewünschte Steifigkeit gegen Kippbewegungen, andererseits die Sicherheit, daß auch bei hängender Anordnung, d. h. mit dem Oberteil nach unten, die beiden tragfesten, vorzugsweise aus Stahl, Gußeisen, Aluminium oder einem anderen Metall bestehenden Teile auch dann noch in Eingriff bleiben, wenn der elastomere Zwischenkörper durch Überlastung, Brand oder andere äußere Einflüsse beschädigt wird.

Ein Ausführungsbeispiel der Erfindung wird nachstehend anhand der Zeichnung näher erläutert. Es zeigen:
- Fig. 1: ein Schalldämmelement zur Hälfte in Seitenansicht und zur Hälfte im Längsschnitt;
- Fig. 2: eine Draufsicht auf das Oberteil des Schalldämmelements nach Fig. 1;
- Fig. 3: einen Querschnitt gemäß Schnittlinie III-III in Fig. 2 durch eine Hälfte des mit Bezug auf die Längsmittelebene symmetrischen Oberteils;
- Fig. 4: eine Draufsicht auf das Unterteil des Schalldämmelements nach Fig. 1.

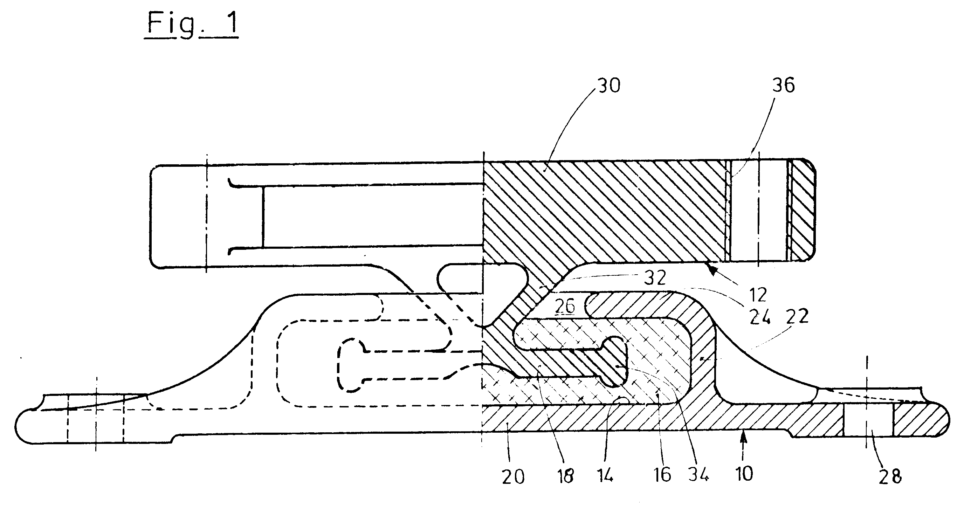

Das in Fig. 1 dargestellte Schalldämmelement besteht nur aus zwei gegossenen metallischen Teilen, nämlich einem Unterteil 10 und einem Oberteil 12. Sie sind dadurch miteinander verbunden, daß das Unterteil 10 in einem inneren Hohlraum 14 einen elastomeren Zwischenkörper 16 enthält, der einen Fußteil 18 des Oberteils 12 umschließt.

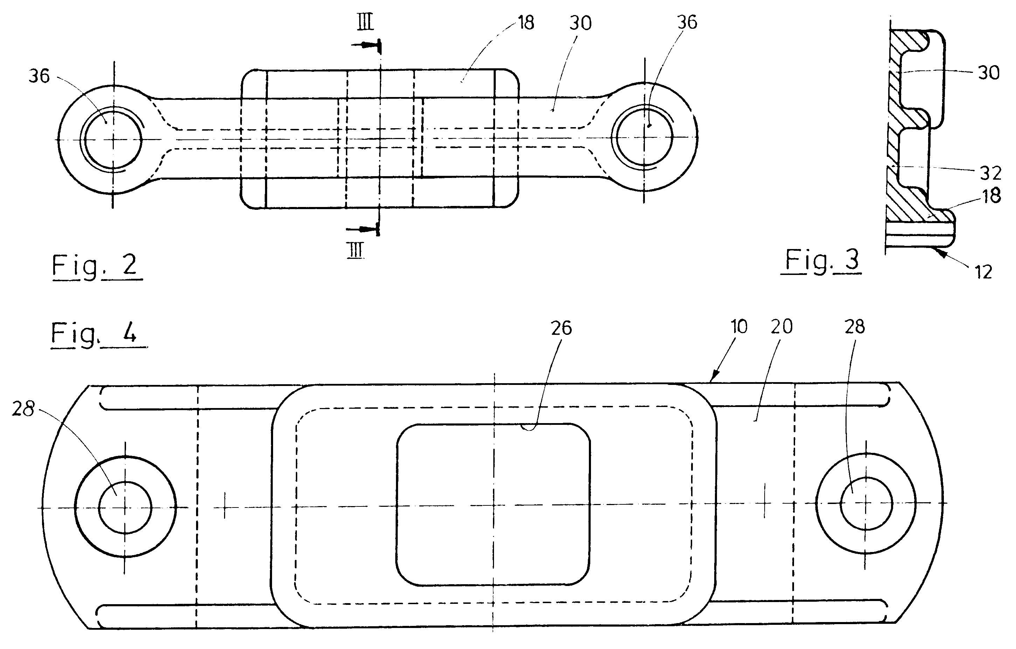

Das Unterteil 10 hat gemäß Fig. 1 und 4 eine längliche, im wesentlichen rechteckige Grundplatte 20 mit abgerundeten Schmalseiten. Im mittleren Bereich bildet die Grundplatte 20 zusammen mit einstückig daran angeformten seitlichen und oberen Begrenzungswänden 22 bzw. 24 des inneren Hohlraums 14 eine flache, im Beispielsfall rechteckige Dose mit einer mittleren, im wesentlichen rechteckigen Öffnung 26 in der oberen Begrenzungswand 24. Die Randkanten der Öffnung 26 kommen den sich in Längsrichtung des Unterteils 10 erstreckenden seitlichen Begrenzungswänden 22 verhältnismäßig nahe, während zwischen den sich in Querrichtung des Unterteils 10 erstreckenden seitlichen Begrenzungswänden 22 und den dazu parallelen Randkanten der Öffnung 26 ein verhältnismäßig großer Abstand besteht.

Die Grundplatte 20 ist nur um die Wandstärke der seitlichen Begrenzungswände 22 breiter als der innere Hohlraum 14, aber wesentlich länger als dieser. In den überstehenden Bereichen, nahe den Enden der Grundplatte 20 befinden sich Lageraugen mit Befestigungslöchern 28. Im Beispielsfall ist die Unterseite der Grundplatte 20 im gesamten mittleren Bereich auch etwas eingezogen, so daß nur die in Fig. 4 durch gestrichelte Linien angegebenen Endbereiche an der das Schalldämmelement tragenden Fläche anliegen und bearbeitet werden müssen.

Das Oberteil 12 hat einen wesentlich längeren Kopfteil 30 als Fußteil 18. Dazwischen erstreckt sich ein durchbrochener Übergangsbereich 32, der sich vom Kopfteil 30 zum Fußteil 18 hin verjüngt. Der Fußteil 18 hat gemäß Fig. 1 und 2 im wesentlichen die Form einer rechteckigen Platte mit Verstärkungswülsten 34 an den sich in Querrichtung erstreckenden Endkanten. Im montierten Zustand nach Fig. 1 erstreckt sich der Fußteil 18 in mittlerer Lage und Höhe parallel zur Grundplatte 20 im inneren Hohlraum des Unterteils 10 und ist dabei vollständig in den elastomeren Zwischenkörper 16, der z. B. aus Polyurethan bestehen kann, eingebettet. Der Übergangsbereich 32 befindet sich im Bereich der Öffnung 26, und der Kopfteil 30, an dessen Enden Lageraugen mit Gewindelöchern 36 angebracht sind, erstreckt sich in seiner Längsausrichtung mit gleicher Mittellängsebene parallel zur Grundplatte 20 über dem Unterteil 10. Der Kopfteil 30 bildet einen Balken mit T-förmigem Querschnitt. Seine Länge einschließlich der Lageraugen mit Gewindebohrungen 36 ist so bemessen, daß die Befestigungslöcher 28 in der Grundplatte 20 nicht überdeckt, sondern frei zugänglich sind.

Die Länge des Fußteils 18 ist größer als die Länge der Öffnung 26, die Breite des Fußteils 18 aber schmaler als die Breite der Öffnung 26. Da der Übergangsbereich 32 in Längsrichtung wesentlich schmaler (kürzer) ist als der Fußteil 18 und die Öffnung 26, können die beiden Teile 10 und 12 in der Weise zu dem in Fig. 1 gezeigten Eingriff gebracht werden, daß der Fußteil in Schräglage, d. h. in Längsrichtung gekippt, durch die Öffnung 26 teilweise eingeführt, dann in Längsrichtung verschoben, dann auch mit der anderen Endkante eingeführt und schließlich in die in Fig. 1 gezeigte Mittellage gebracht wird.

Wenn die kürzeren Seitenkanten des Fußteils 18 pfeilspitzenartig gestaltet werden, besteht außerdem die Möglichkeit, den Fußteil 18 mit diagonal zur rechteckigen Öffnung 26 ausgerichteten Pfeilspitzen einzuführen und dann das Oberteil 12 in die Lage parallel zum Unterteil 10 zu drehen.

Es versteht sich, daß die Teile 10 und 12 im Rahmen der Schutzansprüche auch eine andere Form haben können als das gezeichnete Ausführungsbeispiel.

## Patentansprüche

1. Schalldämmelement, bestehend aus zwei mit Befestigungsmitteln (28, 36) versehenen, tragfesten Teilen, die durch einen von ihnen weitgehend umschlossenen Zwischenkörper (16) aus einem elastomeren Material miteinander verbunden sind, mit einem Unterteil (10), das einen Hohlraum (14) mit einer mittleren Öffnung (26), welche mit Abstand zur Umfangswand (22) des inneren Hohlraumes (14) angeordnet ist, aufweist und mit mehreren Befestigungsmitteln (28) am Rand des Unterteils (10) sowie einem Oberteil, welches mehrere mit Abstand voneinander angeordnete Befestigungsmittel (36) trägt und einen Fußteil (18) hat, der vom Rand der Öffnung (26) übergriffen wird, zur Lagerung und Aufnahme einer Horizontalkraft bei z. B. Heizungsrohren, Luftkanälen, Aggregaten und Maschinen, **dadurch gekennzeichnet,** daß das Unterteil (10) im wesentlichen die Form einer die Öffnung (26) aufweisenden Dose hat, der Fußteil (18) mit Zwischenabstand zu allen Begrenzungswänden (20, 22, 24) des inneren Hohlraumes (14) vollständig in dem diesen ausfüllenden elastomeren Zwischenkörper (16) eingebettet ist und ausserhalb der Öffnung (26) die Befestigungsmittel (36) an einem einzigen, fest mit dem Fußteil (18) verbundenen Kopfteil (30) trägt, und daß der Fußteil (18) in seiner Längserstreckung länger ist als die Öffnung (26) im Unterteil (10), aber nur so lang, daß er bei der Montage in Schräglage oder teilweise gedrehter Lage in die Öffnung (26) einführbar ist.

2. Schalldämmelement nach Anspruch 1, **dadurch gekennzeichnet**, daß das Unterteil (10) eine Grundplatte (20) mit Befestigungslöchern (28) aufweist, an welcher die Begrenzungswände (22, 24) des inneren Hohlraums (14) angeformt sind.

3. Schalldämmelement nach Anspruch 1 oder 2, **dadurch gekennzeichnet**, daß der Fußteil (18) die Form einer Platte mit wenigstens teilweise verstärktem Rand (34) hat und sich im wesentlichen parallel zur Grundplatte (20) erstreckt.

4. Schalldämmelement nach einem der Ansprüche 1 bis 3, **dadurch gekennzeichnet**, daß der Kopfteil (30) einen im wesentlichen T-förmigen Querschnitt und Lageraugen mit Befestigungsmitteln (36) an den Enden aufweist.

5. Schalldämmelement nach einem der Ansprüche 1 bis 4, **dadurch gekennzeichnet**, daß das Unterteil (10) mit seinem inneren Hohlraum (14) und dessen Öffnung (26) sowie das Oberteil (12) mit seinem Kopf-und Fußteil (30, 18) eine längliche Form haben und sich parallel übereinander und ineinander erstrecken.

## Claims

1. A sound-damping element, comprising two parts which are of sufficient strength to bear loads, are provided with fastening means (28, 36) and which are connected to each other by an intermediate member (16) substantially enclosed thereby and consisting of an elastomeric material, having a lower part (10) which has a cavity (14) with a central opening (26) which is disposed at a distance from the peripheral wall (22) of the inner cavity (14), and having a plurality of fastening means (28) at the periphery of the lower part (10) and an upper part which has a plurality of fastening means (36) spaced apart from one another, and has a base part (18), which is overlapped by the rim of the opening (26), for supporting and accommodating a horizontal force in, for example, heating pipes, air ducts, machinery and engines, characterised in that the lower part (10) is substantially in the form of a socket having the opening (26), the base part (18) is embedded at an intermediate distance from all the boundary walls (20, 22, 24) of the inner cavity (14) completely in the elastomeric intermediate member (16) filling said cavity and outside the opening (26) carries the fastening means (36) on a single top part (30) securely connected with the base part (18), and in that in its longitudinal extension the base part (18) is longer than the opening (26) in the lower part (10) but only so long that it can be introduced into the opening (26) when installed in an inclined position or in a partly rotated position.

2. A sound-damping element according to Claim 1, characterised in that the lower part (10) has a base plate (20) with fastening holes (28), on which the boundary walls (22, 24) of the inner cavity (14) are formed.

3. A sound-damping element according to Claim 1 or 2, characterised in that the base part (18) is in the form of a plate with an at least partly reinforced rim (34) and extends substantially parallel to the base plate (20).

4. A sound-damping element according to any one of Claims 1 to 3, characterised in that the top part (30) is of substantially T-shaped cross-section and at the ends has mounting lugs with fastening means (36).

5. A sound-damping element according to any one of Claims 1 to 4, characterised in that the lower part (10) with its inner cavity (14) and its opening (26) and the upper part (12) with its top and base parts (30, 18) are of elongate shape and extend parallel one above the other and in one another.

## Revendications

1. Elément amortisseur de bruit, constitué de deux pièces porteuses munies de moyens de fixation (28, 36) et reliées par un corps intermédiaire (16) en élastomère qu'elles enferment entièrement, à savoir une pièce inférieure (10) présentant un volume creux (14) dont la paroi périphérique interne est à une certaine distance d'une ouverture centrale (26) ainsi que plusieurs moyens de fixation (28) le long du bord de la pièce inférieure (10) et une pièce supérieure portant plusieurs moyens de fixation (36) espacés les uns des autres ainsi qu'un pédicule (18) recouvert par le bord de l'ouverture (36), pour recevoir une force horizontale, par exemple celle produite par des tuyaux de chauffage, des tuyaux d'aération, des systèmes ou des machines, caractérisé en ce que la pièce inférieure (10) a sensiblement la forme d'une boîte munie d'une ouverture (26), le pédicule (18) est, d'une part noyé à une certaine distance de l'ensemble des parois (20, 22, 24) du volume creux (14), entièrement dans un corps intermédiaire élastomère (16) remplissant le volume (14), d'autre part solidaire d'une tête (30) située au-delà de l'ouverture et portant les moyens de fixation (36), le pédicule (18) ayant une dimension longitudinale dépassant celle de l'ouverture (10) d'une quantité telle qu'il est possible, au montage, de faire passer le pédicule à travers l'ouverture (26), en l'inclinant ou en le tournant.

2. Elément amortisseur de bruit selon la revendication 1, caractérisé en ce que la pièce inférieure (10) comporte une embase (20) équipée de trous de fixation (28) et à la forme de laquelle sont accordées les parois (22, 24) du volume interne (14).

3. Elément amortisseur de bruit selon la revendication 1 ou 2, caractérisé en ce que le pédicule (18) a la forme d'une plaque renforcée sur au moins une partie (34) de son bord et qui s'étend sensiblement parallèlement à l'embase (20).

4. Elément amortisseur de bruit selon l'une des revendications 1 à 3, caractérisé en ce que la tête (30) présente une section de forme sensiblement en T et à ses extrémités des bossages d'appui associés aux moyens de fixation (36).

5. Elément amortisseur selon l'une des revendications 1 à 4, caractérisé en ce que la pièce inférieure (10) avec son volume creux (14) et son ouverture (26) ainsi que la pièce supérieure (12) avec sa tête et son pédicule (30, 18) ont une forme allongée et sont emboîtés parallèlement l'une au-dessus de l'autre.
